(19) **Europäisches Patentamt / European Patent Office / Office européen des brevets**

(11) **EP 4 626 125 A2**

(12) # EUROPEAN PATENT APPLICATION

(43) Date of publication:
**01.10.2025   Bulletin 2025/40**

(21) Application number: **25190944.6**

(22) Date of filing: **17.08.2021**

(51) International Patent Classification (IPC):
**H04W 74/0816** (2024.01)

(52) Cooperative Patent Classification (CPC):
**H04W 74/0816; H04W 52/02; H04W 52/0216; H04W 52/0235; H04W 52/028;** H04W 74/002; H04W 84/12

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:   **07.02.2021   PCT/CN2021/075885**

(62) Document number(s) of the earlier application(s) in accordance with Art. 76 EPC:
**21924157.7 / 4 262 302**

(71) Applicant: **GUANGDONG OPPO MOBILE TELECOMMUNICATIONS CORP., LTD.**
**Dongguan, Guangdong 523860 (CN)**

(72) Inventors:
• **LU, Liuming**
  **Dongguan, Guangdon, 523860 (CN)**
• **HUANG, Lei**
  **049483 Singapore (SG)**

(74) Representative: **Penza, Giancarlo**
**Bugnion S.p.A.**
**Viale Lancetti, 17**
**20158 Milano (IT)**

Remarks:
This application was filed on 22.07.2025 as a divisional application to the application mentioned under INID code 62.

(54) **WIRELESS COMMUNICATION METHOD, STATION DEVICE AND ACCESS POINT DEVICE**

(57)   Provided are a wireless communication method, a station device and an access point device, which ensure that other stations within a basic service set (BSS) do not affect a frame exchange performed in a timely manner by a station, which supports a low-latency service, within a specified service period (SP). The wireless communication method comprises: according to a frame exchange allowed within a target duration before a starting point of the next low-latency service period in a basic service set (BSS), a station device determining, upon obtaining a transmission opportunity or within the obtained transmission opportunity, whether to send a physical protocol data unit (PPDU).

**EP 4 626 125 A2**

## Description

### CROSS-REFERENCE TO RELATED APPLICATION

This application claims priority to International Patent Application No. PCT/CN2021/075885 filed with Chinese Patent Office on February 07, 2021 and entitled "WIRELESS COMMUNICATION METHOD, STATION DEVICE AND ACCESS POINT DEVICE", the disclosure of which is hereby incorporated by reference in its entirety.

### TECHNICAL FIELD

Embodiments of the disclosure relates to the field of communication, and particularly to a method for wireless communication, a station (STA), and an access point (AP).

### BACKGROUND

Introduction of Target Wake Time (TWT) allows an access point (AP) to manage behaviors of a Basic Service Set (BSS) to relieve contention between stations (STA). Meanwhile, with TWT, scheduling is characterized in that a specific STA is designated by time to perform frame exchange in a service period (SP). However, under possible impact from another STA in the BSS, a low-latency STA may not be supported to perform timely frame exchange within a designated SP.

### SUMMARY

Embodiments of the disclosure provide a method for wireless communication, a station (STA), and an access point (AP), which ensures that a low-latency STA can perform timely frame exchange within a designated SP without being impacted by another STA in the BSS.

In a first aspect, a method for wireless communication is provided. The method includes the following operations.

In response to a target duration meeting a first condition, a station (STA) does not transmit a physical layer protocol data unit (PPDU) upon acquiring a transmission opportunity (TXOP) or within the TXOP acquired; and/or

in response to the target duration meeting a second condition, the STA transmits the PPDU upon acquiring the TXOP or within the TXOP acquired.

The target duration is located before a start time of a next low-latency service period (SP) in a Basic Service Set (BSS).

In a second aspect, a method for wireless communication is provided. The method includes the following operations.

An access point (AP) determines whether a target station (STA) is allowed to transmit a physical layer protocol data unit (PPDU) within a target duration before a start time of a next low-latency service period (SP) in a Basic Service Set (BSS).

In a third aspect, a STA is provided to implement the method of the first aspect.

Specifically, the STA may include a functional module configured to implement the method of the first aspect.

In a fourth aspect, an AP is provided to implement the method of the second aspect.

Specifically, the AP may include functional modules configured to implement the method of the second aspect.

In a fifth aspect, provided is a STA including a memory and a processor. The memory is configured to store a computer program. The processor is configured to call and run the computer program stored in the memory to implement the method of the first aspect.

In a sixth aspect, provided is an AP including a memory and a processor. The memory is configured to store a computer program. The processor is configured to call and run the computer program stored in the memory to implement the method of the second aspect.

In a seventh aspect, a device is provided to implement the method of the first aspect or the second aspect.

Specifically, the device may include a processor configured to call and run a computer program stored in a memory to cause an equipment installed with the device to implement the method of the first aspect or the second aspect.

In an eighth aspect, provided is a computer-readable storage medium having stored thereon a computer program, which causes a computer to implement the method of the first aspect or the second aspect.

In a ninth aspect, provided is a computer program product, including computer program instructions, which cause a computer implement the method of the first aspect or the second aspect.

In a tenth aspect, provided is a computer program which, when run on a computer, causes the computer to implement the method of the first aspect or the second aspect.

With a technical solution of the first aspect, a STA may transmit a PPDU upon acquiring a TXOP or within the TXOP acquired, and/or transmit no PPDU upon acquiring a TXOP or within the TXOP acquired, according to a condition met by a target duration before a time point of start of a next low-latency SP in the BSS, thereby ensuring that a PPDU to be transmitted by the STA does not delay or damage designated transmission in a low-latency SP.

With a technical solution of the second aspect, an AP may determine whether a target STA is allowed to transmit a PPDU within a target duration before a time point of start of a next low-latency SP in a BSS, thereby ensuring that a PPDU to be transmitted by the target STA does not delay or damage designated transmission in a low-latency SP.

BRIEF DESCRIPTION OF THE DRAWINGS

FIG. 1 is a diagram of architecture of a communication system applied to embodiments of the disclosure.

FIG. 2 is a diagram of a restricted TWT SP according to the disclosure.

FIG. 3 is a diagram of a Request To Send/Clear To Send (RTS/CTS) according to the disclosure.

FIG. 4 is a diagram of impact of transmission in an SP by an overly long physical layer protocol data unit (PPDU) according to the disclosure.

FIG. 5 is a flowchart of a method for wireless communication according to embodiments of the disclosure.

FIG. 6 is a diagram of a target duration according to embodiments of the disclosure.

FIG. 7 is a flowchart of another method for wireless communication according to embodiments of the disclosure.

FIG. 8 is a diagram of another target duration according to embodiments of the disclosure.

FIG. 9 is a diagram of a target feedback frame according to embodiments of the disclosure.

FIG. 10 is a diagram of an indication frame according to embodiments of the disclosure.

FIG. 11 is a diagram of another target feedback frame according to embodiments of the disclosure.

FIG. 12 is a diagram of a trigger frame according to embodiments of the disclosure.

FIG. 13 is a diagram of a PPDU allowing to be transmitted just once according to embodiments of the disclosure.

FIG. 14 is a block diagram of a STA according to embodiments of the disclosure.

FIG. 15 is a block diagram of an AP according to embodiments of the disclosure.

FIG. 16 is a block diagram of communication equipment according to embodiments of the disclosure.

FIG. 17 is a block diagram of a device according to embodiments of the disclosure.

FIG. 18 is a block diagram of a communication system according to embodiments of the disclosure.

DETAILED DESCRIPTION

Description to the technical solutions of the disclosure is given below with reference to the drawings in embodiments of the present disclosure. Clearly, embodiments illustrated herein are part, instead of all embodiments according to the present disclosure. All other embodiments obtained by those of ordinary skill in the art based on the embodiments of the present disclosure without creative efforts shall fall within the scope of protection of the present disclosure.

Embodiments of the disclosure of the technical solution may be applied to various communication systems such as wireless local area networks (WLAN), wireless fidelity (WiFi), or other communication systems, etc.

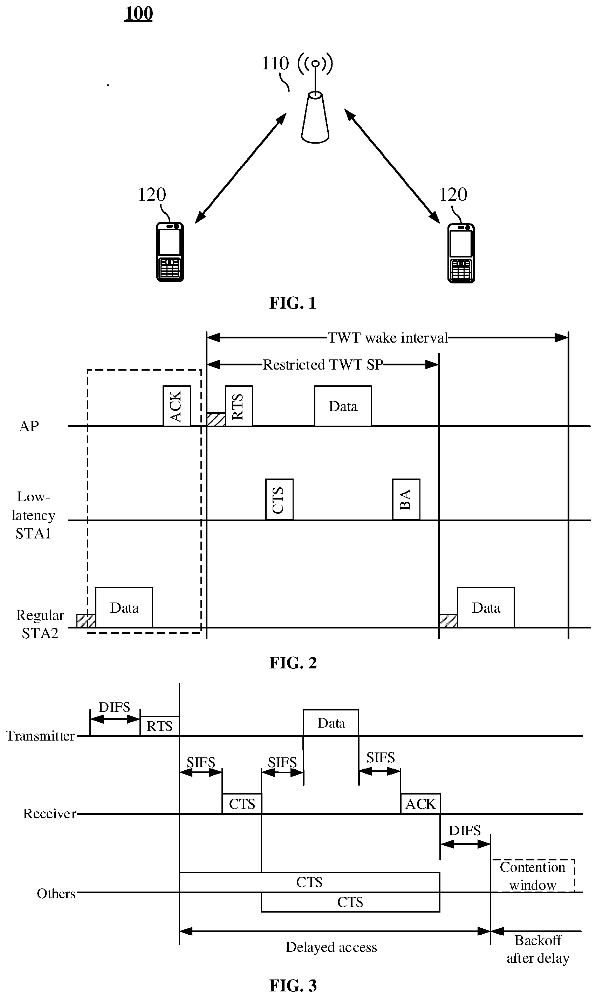

Illustratively, FIG. 1 shows a communication system 100 applied to embodiments of the disclosure. The communication system 100 may include an Access Point (AP) 110 and a station (STA) 120 accessing a network through the AP 110.

In embodiments of the disclosure, the STA may be deployed on land, such as indoor or outdoor, handheld, wearable, or onboard; on water (such as a ship, etc.); and may also be airborne such as onboard an aircraft, a balloon, a satellite, etc.

In embodiments of the disclosure, the STA may be a mobile phone, a pad, a computer with a wireless transceiver function, a virtual reality (VR) device, an augmented reality (AR) device, a wireless device in industrial control, a wireless device in self driving, a wireless device in remote medical, a wireless device in a smart grid, a wireless device in transportation safety, a wireless device in a smart city, or a wireless device in a smart home, etc.

Illustratively but not limitedly, in embodiments of the disclosure, the STA may be further a wearable device. The wearable device may also be referred to as a wearable smart device, and is a collective term for wearable devices developed by applying intelligent design to everyday wear using wearable technology, such as glasses, gloves, watches, clothing, shoes, etc. A wearable device is a portable device directly worn by a user, or integrated to clothes or an accessory of the user. A wearable device not only may be a hardware device, but also may implement a powerful function through software support, data exchange, cloud exchange, etc. A wearable smart device in general may include one with comprehensive functions, being large-sized, and implementing all or some of the functions independent of any smart mobile phone, such as a smart watch, smart glasses, etc., and one that only focuses on a certain application function and that has to be used together with another device such as a smart mobile phone, such as various smart bracelets, smart jewelry for monitoring a physical sign, etc.

FIG. 1 illustrates an AP and two STAs. Optionally, the communication system 100 may include multiple APs and include another number of STAs, which is not limited to the embodiments of the disclosure.

It is to be understood that a device having a communication function in a network/system in the embodiments of the disclosure may be referred to as communication equipment. Taking the communication system 100 shown in FIG. 1 as an example, the communication equipment may include an AP 110 and a STA(s) 120 each having a communication function. The AP 110 and the STA(s) 120 each may be a specific device mentioned above, which is not repeated here. The communication equipment may further include other devices in the communication system 100, such as another network entity such as a network controller, a gateway, etc., which is not limited thereto in the embodiments of the disclosure.

It is to be understood that terms "system" and network" in the disclosure are often interchangeable in usage. The term "and/or" in the disclosure describes just an association between associated objects, including three possible relationships. For example, A and/or B may indicate the following three cases. Only A exists, both A and B exist, and only B exists. In addition, the character "/" herein generally indicates that the contextual objects are in an "or" relationship.

It is to be understood that "indication/indicate" mentioned in the embodiments of the disclosure may refer to direct indication or indirect indication, and may further mean that there is an association relation. For example, By saying that A indicates B, it may mean that A indicates B directly, such as when B may be acquired through A; it may also mean that A indicates B indirectly, such as when A indicates C and B may be acquired through C; or it may mean an association relation between A and B.

Terms used in detailed description of the disclosure are only for explaining embodiments of the disclosure rather than limiting the disclosure. Terms "first", "second", "third", "fourth", etc., in specification, claims, and drawings of the disclosure is intended to differentiate different objects, instead of denoting any specific order. In addition, terms such as "including/comprising", "having", or any other variant of the terms are intended to cover a non-exclusive inclusion.

In describing an embodiment of the disclosure, a term "corresponding" may mean a direct correspondence or an indirect correspondence between two items, an association between the two, or a relation of indicating and being indicated, configuring and being configured, etc.

In embodiments of the disclosure, "pre-defined" may be implemented by saving, in a device (including such as a terminal device, a network device, etc.) in advance, a corresponding code, table, or another mode capable of being configured to indicate relevant information, specific implementation of which is not limited thereto in the disclosure. For example, pre-defined may refer to being defined in protocol.

In embodiments of the disclosure, the "protocol" may refer to a standard protocol of the field of communications, which may include such as a WiFi protocol, a relevant protocol applying to a future WiFi communication system, etc., which is not limited thereto in the disclosure.

For better understanding of the embodiments of the disclosure, a target wake time (TWT) related to the disclosure is described.

A TWT mechanism first appears in 802.11ah standard "Wi-Fi HaLow", and is used to support power saving in a large-scale Internet of things environment. In 802.11ax, based on 802.11ah, the TWT mechanism has been modified to support trigger-based uplink (UL) transmission, thereby expanding a range to which TWT applies.

In TWT, a timetable between a STA and an AP (which is negotiated by the STA and the AP) is established. The timetable consists of TWT periods. Upon expiration of a period negotiated by the STA and the AP, the STA will wake up, wait for a trigger frame transmitted by the AP, and perform data exchange once. After completion of the present transmission, the STA will return to a doze status. Each STA will perform independent negotiation with an AP. Each STA may have a separate TWT period.

TWT allows an AP to manage behaviors of a Basic Service Set (BSS) to relieve inter-STA contention. Meanwhile, with TWT, scheduling is characterized in that a specific STA is designated by time to perform frame exchange in a service period (SP). Therefore, in formulating a standard 802.11be, it is proposed to push forward research of low-delay technology of 802.11be by optimizing the TWT mechanism. However, a STA supporting no TWT or not designated to perform transmission in the TWT SP will continue to occupy a network channel resource if a TXOP of the STA does not end when the TWT SP starts, which impacts transmission by the designated STA in the TWT SP, thereby leading to an unpredictable delay of UL data of the designated STA.

An improved TWT solution, as shown in FIG. 2, suggests to adding, in TWT, a rule as follows. A transmission opportunity (TXOP) of regular STAs (i.e., STAs supporting no low-latency service) should be ended before start of a restricted TWT SP. The TXOP of the STA is terminated before the TXOP ends so as to support frame exchange by a low-latency STA in a designated SP.

Here, a protocol of request to send (RTS) or clear to send (CTS) may correspond to a handshake protocol and is used to solve a conflict in frame exchange caused by a hidden terminal. An RTS is enabled after a distributed inter-frame spacing (DIFS). When an RTS/CTS is enabled, before transmitting a data frame, a STA first transmits an RTS frame. When a receiver is willing to receive the data frame, the receiver will respond with a CTS frame. After the RTS/CTS exchange, a time window (identified in the CTS frame) is opened for the sender STA to transmit the data frame to the STA that acknowledges the receiving. After receiving the data frame, the receiver feeds an acknowledgement (ACK) or a block acknowledgment (BA) back to the sender after a short interframe space (SIFS), acknowledging receiving of the data frame, as shown in FIG. 3.

Although increasing an opportunity of accessing a channel by a member STA and an SP in a TWT AP, the improved solution as shown in FIG. 2 can solve just partly the uncertainty of time of start of a TWT SP, with poor reliability in ensuring that a SP of a low-latency STA does not be taken up by another STA supporting no low-latency service. For example, a TXOP for another transmission can be ended just before a SP comes. However, transmission of a long physical layer protocol data unit (PPDU) having been going on till before the SP cannot be ended.

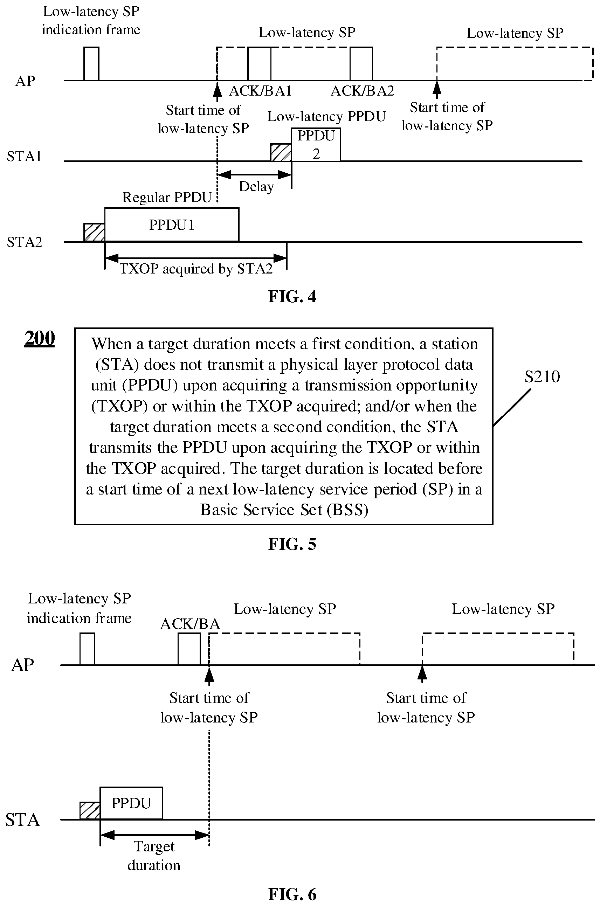

As shown in FIG. 4, having acquired a TXOP, STA 2 (such as a STA supporting no low-latency service) transmits a PPDU. As the start time of a low-latency service is not taken into consideration, the PPDU is overly long, such that transmission time of transmitting the PPDU and a low-latency SP of STA 1 overlap, causing delay of transmission of low-latency service data in the low-latency SP of STA 1. Impact on the SP cannot be changed even if the TXOP of STA2 is terminated before the TXOP ends.

Based on the problems described above, the disclosure proposes a solution for transmitting a low-latency service, capable of allowing a low-latency STA to perform timely frame exchange within a designated SP without being impacted by another STA in the BSS.

It is to be noted that a STA may also be referred to as a non-AP STA.

A technical solution of the disclosure is elaborated below with reference to embodiments.

FIG. 5 is a flowchart of a method 200 for wireless communication according to embodiments of the disclosure. As shown in FIG. 5, the method 200 may include at least some content as follows.

In S210, when a target duration meets a first condition, a station (STA) does not transmit a physical layer protocol data unit (PPDU) upon acquiring a transmission opportunity (TXOP) or within the TXOP acquired; and/or when the target duration meets a second condition, the STA transmits the PPDU upon acquiring the TXOP or within the TXOP acquired. The target duration is located before a start time of a next low-latency service period (SP) in a Basic Service Set (BSS).

In embodiments of the disclosure, in an operation mode supporting a low-latency service, to allow a low-latency STA to perform timely frame exchange within a designated SP without being impacted by another STA in the BSS, a STA may transmit a PPDU upon acquiring a TXOP or within the TXOP acquired, and/or transmit no PPDU upon acquiring a TXOP or within the TXOP acquired, according to a condition met by a target duration before a start time of a next low-latency SP in the BSS.

In some embodiments, the next low-latency SP is not configured for the STA to perform frame exchange.

In some embodiments, the STA for example may be one of an extremely high throughput (EHT), or may be another STA, such as a legacy STA (i.e., a last-generation STA), which is not limited thereto in the disclosure.

In some embodiments, the next low-latency SP may include a restricted Target Wake Time (TWT) SP.

In some embodiments, an AP may indicate, using a low-latency SP indication frame (such as a beacon frame or a TWT response frame), a low-latency SP allocated in advance, including a start time and an end time of a relevant low-latency SP, for a designated STA supporting a low-latency to perform frame exchange in the low-latency SP.

That is, a STA may acquire, based on a low-latency SP indication frame (such as a beacon frame, a TWT response frame, etc.) transmitted by the AP, information on a next low-latency SP in the BSS, including a start time and/or an end time of the low-latency SP. It is acquired at the same time that the next low-latency SP is not configured for the STA to perform frame exchange.

In some embodiments, the STA acquires a restricted TWT parameter through a restricted TWT element or a restricted TWT SP announcement element.

In some embodiments, the restricted TWT parameter includes information on a start time of a next restricted TWT SP.

In some embodiments, the restricted TWT element is transmitted by an access point (AP) associated with the STA via at least one of a probe response frame, an association response frame, a reassociation response frame, a management frame, and a beacon frame carrying the restricted TWT element.

In some embodiments, the restricted TWT SP announcement element is transmitted by an access point (AP) associated with the STA via at least one of a probe response frame, an association response frame, a reassociation response frame, a management frame, and a beacon frame carrying the restricted TWT SP announcement element.

In some embodiments, the restricted TWT element may be a restricted TWT element received most recently.

In some embodiments, the restricted TWT SP announcement element may be a restricted TWT SP announcement element received most recently.

Specifically, for example, the STA may acquire, through a restricted TWT element or a restricted TWT SP announcement element received most recently, a value of the restricted TWT parameter, including information on the start time of the next low-latency SP. The restricted TWT element or the restricted TWT SP announcement element may be transmitted by an AP associated with the STA using a probe response frame, an association response frame, a reassociation response frame, another management frame, a beacon frame, etc., that carries the restricted TWT element or the restricted TWT SP announcement element.

In some embodiments, the target duration may be a time interval between a start time at which the PPDU is intended to be sent and the start time of the next low-latency SP, as shown for example in FIG. 6.

For example, the time interval between the start time ($T_{TXOPST}$) at which the PPDU is intended to be sent and the start time of the next low-latency SP ($T_{LLSPST}$) may be Difference($T_{TXOPST}, T_{LLSPST}$). That is, the target duration may be Difference($T_{TXOPST}, T_{LLSPST}$).

In some embodiments, when a transmission duration for transmitting the PPDU is determined, the first condition includes that a first duration is greater than the target duration, and/or the second condition includes that the first duration is less than or equal to the target duration.

The first duration $T_1$ may meet: $T_1=T_{PPDU}+T_s$, or $T_1=T_{PPDU}+T_f+T_s$.

$T_{PPDU}$ may be the transmission duration for transmitting the PPDU. $T_f$ may be a transmission duration for transmitting a feedback frame. $T_s$ may be a preset interframe interval.

In some embodiments, when a transmission duration for transmitting the PPDU is undetermined, the first condition includes that a second duration is greater than the target duration, and/or the second condition includes that the second duration is less than or equal to the target duration.

The second duration $T_2$ may meet: $T_2=T_{min-PPDU}+T_s$, or $T_2=T_{min-PPDU}+T_f+T_s$.

$T_{min-PPDU}$ may be a minimal transmission duration for transmitting the PPDU. $T_f$ may be a transmission duration for transmitting a feedback frame. $T_s$ may be a preset interframe interval.

In some embodiments, when the STA determines to transmit the PPDU upon acquiring the TXOP or within the TXOP acquired, the transmission duration $T_{PPDU}$ for transmitting the PPDU meets:

$$T_{PPDU}\leq T_t-T_s, \text{ or } T_{PPDU}\leq T_t-(T_f+T_s).$$

$T_1$ may be the target duration. $T_f$ may be the transmission duration for transmitting the feedback frame. $T_s$ may be the preset interframe interval.

In some embodiments, when the target duration meets the first condition, the STA triggers a backoff flow.

Specifically, for example, when a non-AP STA backs off to 0 (i.e., by setting a backoff timer to a value 0) according to a rule of enhanced distributed channel access (EDCA) beyond a restricted TWT SP, and acquires authorization for transmission or acquires a TXOP, when it is expected that transmission may last till after the start time of any restricted TWT SP, a frame is not transmitted, and a backoff flow will be triggered.

In some embodiments, the target duration is a time interval between a start time of transmission of a PPDU transmission sequence intended to be sent and the start time of the next low-latency SP.

In some embodiments, the first condition includes that a sixth duration is greater than the target duration, and/or the second condition includes that the sixth duration is less than or equal to the target duration.

The sixth duration $T_6$ may meet: $T_6=T_{PPDU\,TXS}$, or $T_6=T_{PPDU\,TXS+}\,T_s$.

$T_{PPDU\,TXS}$ may be a transmission duration of the PPDU transmission sequence intended to be sent. $T_s$ may be a preset interframe interval.

In some embodiments, when the target duration meets the first condition, the STA stops transmission of the PPDU transmission sequence intended to be sent, and triggers a backoff flow.

In some embodiments, the STA does not consider whether an end time of the TXOP is later than the start time of the next low-latency SP when initiating the TXOP beyond a low-latency SP. Multiple PPDU transmission sequences may be intended to be sent within the TXOP. The multiple PPDU transmission sequences may include the PPDU transmission sequence intended to be sent. Before performing PPDU transmission sequence transmission, the STA may detect whether a PPDU transmission sequence to be transmitted lasts till after a start time of any low-latency SP. During the TXOP, when an end time of ending transmission of the PPDU transmission sequence intended to be sent is later than the start time of the next low-latency SP, the STA may stop transmission of the PPDU transmission sequence intended to be sent, and trigger a backoff flow.

In some embodiments, a duration of a frame transmitted by the STA is set using a single protection.

Specifically, for example, a non-AP STA may launch a TXOP beyond a restricted TWT SP, and expect to transmit multiple PPDU transmission sequences (each PPDU transmission sequence including at least one PPDU transmission and possible acknowledge frame) during the TXOP. Meanwhile, instead of considering whether the end time of the TXOP is later than the start time of any restricted TWT SP upon initiating the TXOP, the STA may probe beforehand whether a transmission sequence to be transmitted lasts till after the start time of any restricted TWT SP when performing transmission of each transmission sequence. Therefore, during a TXOP, when time of end of a PPDU transmission sequence to be initiated may be later than the start time of any restricted TWT SP, a holder of the TXOP may stop the transmission of the PPDU transmission sequence, and trigger a backoff flow. In the scene, the duration of a frame transmitted by the non-AP STA may be set using a single protection.

In some embodiments, the STA acquires the TXOP beyond a low-latency SP.

When an end time of a maximal duration of the TXOP settable coincides with or is later than the start time of the next low-latency SP, the STA may set a duration of the TXOP as a seventh duration when initiating the TXOP. A start time of the seventh duration may be when the TXOP is acquired. An end time of the seventh duration may be no later than the start time of the next low-latency SP. A time interval between the end time of the seventh duration and the start time of the next low-latency SP may be less than or equal to a preset interframe interval.

Specifically, for example, when a non-AP STA acquires a TXOP beyond a restricted TWT SP, when the time point of end (end time) of a maximal duration of the TXOP that can be set coincides with or is later than the time point of start (start time) of a nearest restricted TWT SP and the TXOP has to be ended early, to ensure that a time interval between the end time of the TXOP and the start time of the nearest restricted TWT SP is equal to or less than the SIFS, the non-AP STA may set, when initiating the TXOP, the duration of the TXOP as a duration since the start time when the TXOP is acquired till an adjusted end time of the TXOP. The adjusted end time of the TXOP may be no later than the start time of the nearest restricted TWT SP, yet no earlier than the start time of the nearest restricted TWT SP by a time interval longer than a SIFS duration.

In some embodiments, the STA acquires the TXOP beyond a low-latency SP. An end time of the TXOP may be later than the start time of the next low-latency SP. The STA may set a duration of the TXOP as an eighth duration when initiating the TXOP. A start time of the eighth duration may be the time point when the TXOP is acquired. An time of the eighth duration may be later than the start time of the next low-latency SP. A last frame transmitted by the STA before the start time of the next low-latency SP within the TXOP may be a contention free - end (CF-End) frame. A time interval between an end time of transmission of the CF-End frame and the start time of the next low-latency SP may be less than or equal to a preset interframe interval.

Specifically, for example, when a non-AP STA acquires a TXOP beyond a restricted TWT SP, yet the end time of an expected duration of the TXOP may be later than the start time of a nearest restricted TWT SP, and the TXOP has to be ended early, when initiating the TXOP, the non-AP STA may set the duration of the TXOP as a duration since the start time when the TXOP is acquired till the expected end time of the TXOP. The expected end time of the TXOP may be later than the start time of the nearest restricted TWT SP. To ensure that the time interval between the end time of the TXOP and the start time of the nearest restricted TWT SP is equal to or less than the SIFS, the last frame transmitted by the non-AP STA before the start time of the nearest restricted TWT SP during the TXOP may be a CF-End frame. The time interval between the end time of ending transmission of the CF-End frame and the start time of the nearest restricted TWT SP may be equal to or less than the SIFS.

In some embodiments, the STA is a STA in a power save status. If no backoff flow has been initiated, or a backoff flow has been initiated yet no TXOP has been acquired, and when a time interval between a present time and the start time of the next low-latency SP is less than or equal to a preset threshold, the STA may enter a doze status before the start time of the next low-latency SP, and stay in the doze status at least till the start time of the next low-latency SP.

That is, if no backoff flow has been initiated, or a backoff flow has been initiated yet no TXOP has been acquired, and when a time interval between a present time and the start time of the next low-latency SP is less than or equal to a preset threshold, a STA in a power save status may enter a doze status before the start time of the next low-latency SP, and stay in the doze status at least till the start time of the next low-latency SP.

In some embodiments, the preset threshold is a sixth duration $T_6$, meeting: $T_6 = T_{PPDU\ TXS}$, or $T_6 = T_{PPDU\ TXS} + T_s$. $T_{PPDU\ TXS}$ may be a transmission duration of a PPDU transmission sequence intended to be sent. $T_s$ may be a preset interframe interval.

In some embodiments, the STA acquires the preset threshold via a restricted TWT SP announcement element or a restricted TWT element carrying the preset threshold.

In some embodiments, the restricted TWT element is transmitted by an access point (AP) associated with the STA via at least one of a probe response frame, an association response frame, a reassociation response frame, a management frame, and a beacon frame carrying the restricted TWT element.

In some embodiments, the restricted TWT SP announcement element is transmitted by an access point (AP) associated with the STA via at least one of a probe response frame, an association response frame, a reassociation response frame, a management frame, and a beacon frame carrying the restricted TWT SP announcement element.

In some embodiments, the restricted TWT element may be a restricted TWT element received most recently.

In some embodiments, the restricted TWT SP announcement element may be a restricted TWT SP announcement element received most recently.

Specifically, for example, the STA may acquire, through a restricted TWT element or a restricted TWT SP announcement element received most recently, a value of the restricted TWT parameter, including information on the start time of the next low-latency SP. The restricted TWT element or the restricted TWT SP announcement element may be transmitted by an AP associated with the STA using a probe response frame, an association response frame, a reassociation response frame, another management frame, a beacon frame, etc., that carries the restricted TWT element or the restricted TWT SP announcement element.

In some embodiments, the preset interframe interval includes a duration of a short interframe space (SIFS).

In some embodiments, when the STA determines not to transmit the PPDU upon acquiring the TXOP or within the TXOP acquired, and that it suffices to transmit a contention free - end (CF-End) frame within the target duration, the STA transmits the CF-End frame within the target duration.

The contention free - end (CF-End) frame may be configured to allow a TXOP holder to terminate a TXOP.

In some embodiments, the feedback frame may be an acknowledgement (ACK) frame or a block acknowledgment (BA) frame.

Therefore, in the embodiments of the disclosure, a STA may transmit a PPDU upon acquiring a TXOP or within the TXOP acquired, and/or not transmit the PPDU upon acquiring a TXOP or within the TXOP acquired, according to a condition met by a target duration before a start time of a next low-latency SP in the BSS, thereby ensuring that a PPDU to be transmitted by the STA does not delay or damage designated transmission in a low-latency SP.

Furthermore, with the embodiments of the disclosure, it is ensured that a low-latency STA is able to acquire a TXOP and reliably transmit low-latency service data at a start time point of a reserved SP, which solves uncertainty of an actual start time of a low-latency SP (such as a TWT SP) reserved for designated STA transmission in a Wi-Fi standard work mechanism under impact from another STA transmission, and thus removes impact on on-time transmission of low-latency service data, thereby protecting a designated SP configured for low-latency service access, reducing a delay of transmission of low-latency service data.

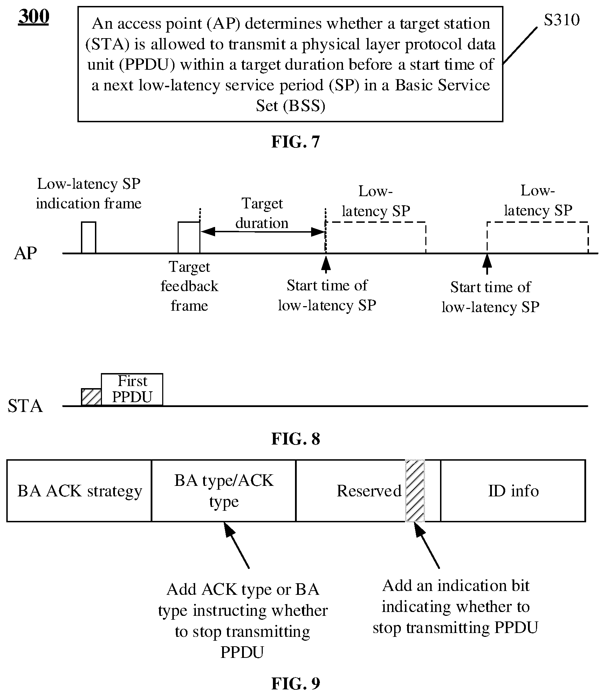

FIG. 7 is a flowchart of a method 300 for wireless communication according to embodiments of the disclosure. As shown in FIG. 7, the method 300 may include at least some content as follows.

In S310, an access point (AP) determines whether a target station (STA) is allowed to transmit a physical layer protocol data unit (PPDU) within a target duration before a start time of a next low-latency service period (SP) in a Basic Service Set (BSS).

In embodiments of the disclosure, in an operation mode supporting a low-latency service, to allow a low-latency STA to perform timely frame exchange within a designated SP without being impacted by another STA in the BSS, an AP may determine whether a target STA is allowed to transmit a PPDU within a target duration before a start time of a next low-latency SP in a BSS.

In some embodiments, the next low-latency SP is not configured for the target STA to perform frame exchange.

In some embodiments, the STA for example may be one of an extremely high throughput (EHT), or may be another STA, such as a legacy STA (i.e., a last-generation STA), which is not limited thereto in the disclosure.

In some embodiments, the next low-latency SP may include a restricted Target Wake Time (TWT) SP.

In some embodiments, the AP may determine information on at least a next low-latency SP in the present BSS, including a start time and/or an end time of the low-latency SP, an object for which the low-latency SP is configured, etc. To ensure that frame exchange by a designated STA in the next low-latency SP is not impacted by the duration of a PPDU transmitted by another STA, when receiving the PPDU transmitted by the another STA, to return an acknowledge frame (ACK or BA), the AP is to make sure that a frame exchange duration in a time interval remaining before the start time of the next low-latency SP will not last till after the start time of the next low-latency SP, and the AP stops the PPDU transmission or frame exchange if it is determined that a scheduled frame exchange duration lasts till after the start time of the next low-latency SP.

In some embodiments, the target duration is a time interval between an end time of transmission of a target feedback frame by the AP and the start time of the next low-latency SP (i.e., the time interval remaining before the start time of the next low-latency SP) as shown in FIG. 8, for example. The target feedback frame may be directed at a first PPDU having been transmitted by the target STA.

In some embodiments, the S310 may include an option as follows.

When a first duration is greater than the target duration, the AP may determine that the target STA is not allowed to transmit the PPDU within the target duration.

The first duration $T_1$ may meet: $T_1 = T_{min-PPDU} + T_s$, or $T_1 = T_{min-PPDU} + T_f + T_s$.

$T_{min-PPDU}$ may be a minimal transmission duration for transmitting the PPDU. $T_f$ may be a transmission duration for transmitting a feedback frame. $T_s$ may be a preset interframe interval.

In some embodiments, when the AP determines that the target STA is not allowed to transmit the PPDU within the target duration, the AP may stop the target STA from acquiring a transmission opportunity (TXOP) within the target duration.

In some embodiments, the AP may stop the target STA from acquiring the TXOP within the target duration by setting a continuation time of the target feedback frame.

The continuation time $T_{tf}$ of the target feedback frame may meet: $T_{tf} \geq T_f + T_t$, or $T_{tf} \geq T_t$.

$T_f$ may be the transmission duration for transmitting the feedback frame. $T_t$ may be the target duration.

For example, the AP may set the continuation time $T_{tf}$ of the target feedback frame by increasing a duration in a duration field of the target feedback frame.

In some embodiments, when the AP determines that the target STA is not allowed to transmit the PPDU within the target duration, the AP may stop the target STA from transmitting the PPDU in a TXOP acquired within the target duration.

In some embodiments, the AP transmits the target feedback frame to the target STA. The target feedback frame may include a first field. The first field may be configured to instruct the target STA to stop transmitting the PPDU within the target duration.

In some embodiments, the target feedback frame may include an acknowledgement (ACK) type or a block acknowledgment (BA) type for instructing to stop transmitting the PPDU.

For example, the target STA may be a non-AP STA supporting an enhanced ACK or BA control frame 1. That is, the target feedback frame may be an enhanced ACK or BA control frame 1. By including a field in an enhanced ACK or BA control frame 1, the AP may instruct the target STA to stop transmitting the PPDU after receiving the ACK frame or the BA frame. As shown in FIG. 9, the target feedback frame may add, in a BA type, an ACK type or BA type instructing whether to stop PPDU transmission, and take a reserved bit as an indication bit indicating whether to stop transmitting the PPDU. For example, a value 1 may indicate that PPDU transmission is to be stopped, and a value 0 may indicate that PPDU transmission is not limited to stop; or vice versa.

In some embodiments, when the AP determines that the target STA is not allowed to transmit the PPDU within the target duration, the AP may transmit an indication frame to the target STA before a second duration ahead of the start time of the next low-latency SP. The indication frame may be configured to forbid the target STA to transmit the PPDU. The second duration may be greater than or equal to a maximal TXOP duration acquired by the target STA. In this case, the target STA may be a legacy STA.

In some embodiments, the indication frame may include a control frame or a management frame carrying information on a quiet interval. The quiet interval may include at least the second duration before the start time of the next low-latency SP.

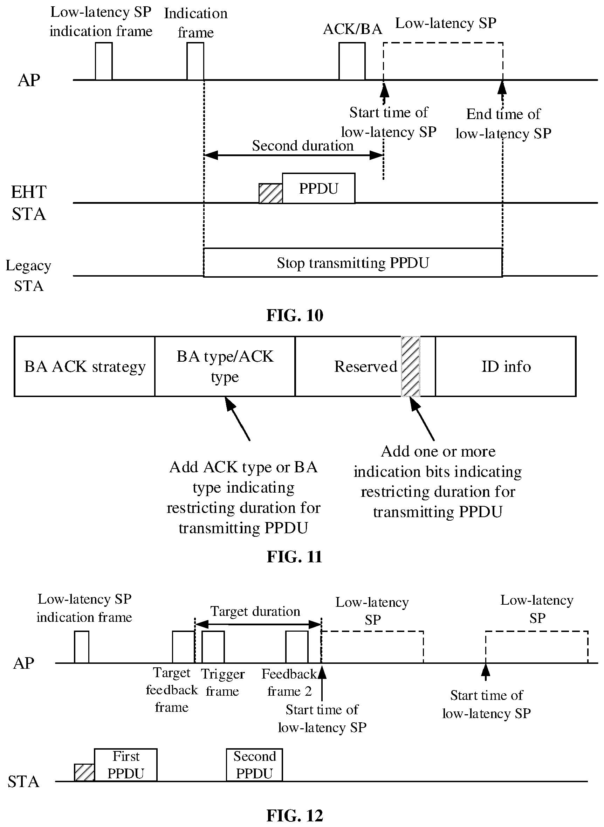

For example, the target STA may be a non-AP STA (such as a legacy STA) not supporting an enhanced ACK or BA control frame. The AP may transmit an indication frame to the target STA before a second duration ahead of the start time of the next low-latency SP, to forbid the legacy STA to transmit the PPDU. Specifically, it may be provided that in a low-latency service operation mode, a STA supporting the low-latency service operation mode may overlook the indication frame, as shown in FIG. 10, for example. The second duration may be greater than or equal to the duration of a maximal TXOP limit the legacy STA is allowed to acquire.

In some embodiments, the S310 may include an option as follows.

When the target duration is greater than or equal to a first duration and less than a third duration, the AP may determine that the target STA is allowed to transmit the PPDU within the target duration.

The first duration $T_1$ and the third duration $T_3$ may meet: $T_1 = T_{min\text{-}PPDU} + T_s$, $T_3 = T_{max\text{-}PPDU} + T_s$; or $T_1 = T_{min\text{-}PPDU} + T_f + T_s$, $T_3 = T_{max\text{-}PPDU} + T_f + T_s$.

$T_{min\text{-}PPDU}$ may be a minimal transmission duration for transmitting the PPDU. $T_{max\text{-}PPDU}$ may be a maximal transmission duration for transmitting the PPDU. $T_f$ may be a transmission duration for transmitting a feedback frame. $T_s$ may be a preset interframe interval.

As an example 1, when the AP determines that the target STA is allowed to transmit the PPDU within the target duration, the AP may transmit a target feedback frame to the target STA. The target feedback frame may include a second field. The second field may be configured to indicate a restricting duration for restricting transmission of the PPDU by the target STA within the target duration.

In some embodiments, the target feedback frame may include an acknowledgement (ACK) type or a block acknowledgment (BA) type for indicating the restricting duration for restricting transmission of the PPDU.

For example, the target STA may be a non-AP STA supporting an enhanced ACK or BA control frame 2. That is, the target feedback frame may be an enhanced ACK or BA control frame 2. By including a field in an enhanced ACK or BA control frame 2, the AP may indicate a restricting duration for restricting transmission of the PPDU by the target STA within the target duration after receiving the ACK frame or the BA frame. As shown in FIG. 11, the target feedback frame may add, in a BA type, an ACK type or BA type indicating "the restricting duration for restricting PPDU transmission", and use one or more indication bits in the reserved bit to indicate the restricting duration for restricting PPDU transmission.

In some embodiments, the restricting duration $T_R$ meets: $T_R \leq T_t - T_s$.

$T_t$ may be the target duration. $T_s$ may be a preset interframe interval.

As an example 2, when the AP determines that the target STA is allowed to transmit the PPDU within the target duration, the AP may transmit a trigger frame to the target STA. The trigger frame may be configured to trigger transmission of at least one PPDU by the target STA, with an end time of ending transmission of the at least one PPDU being no later than the start time of the next low-latency SP. For example, as shown in FIG. 12, the AP may transmit a trigger frame within the target duration. The trigger frame may be configured to trigger transmission of a second PPDU by a STA (target STA). Having received the trigger frame, the STA may transmit the second PPDU. The STA may complete transmission of the second PPDU before the start time of the next low-latency SP. In addition, the feedback frame 2 may be a feedback frame directed at the second PPDU.

In some embodiments, when the AP transmits the trigger frame to the target STA, the AP may stop the target STA from acquiring a transmission opportunity (TXOP) within the target duration and/or stop the target STA from transmitting the PPDU in a TXOP acquired within the target duration.

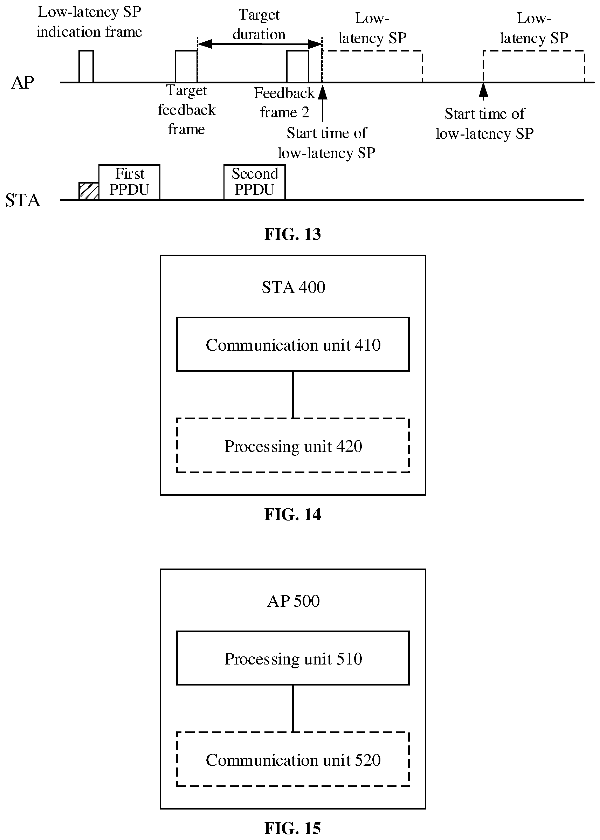

As an example 3, when the AP determines that the target STA is allowed to transmit the PPDU within the target duration, the AP may determine that the target STA is allowed one PPDU transmission within the target duration. For example, as shown in FIG. 13, a STA (target STA) may transmit just the second PPDU within the target duration. The feedback frame 2 may be a feedback frame for the second PPDU.

In some embodiments, when a buffer status report (BSR) reported by the target STA indicates that a PPDU length required by a queue does not exceed a fourth duration, the AP may limit PPDU transmission by the target STA based on the example 1 or the example 2.

The fourth duration $T_4$ may meet: $T_4 \leq T_t - T_s$. $T_1$ may be the target duration. $T_s$ may be a preset interframe interval.

In some embodiments, when a buffer status report (BSR) reported by the target STA indicates that a PPDU length required by a queue exceeds a fourth duration, the AP may limit PPDU transmission by the target STA based on the example 1, the example 2, or the example 3.

The fourth duration $T_4$ may meet: $T_4 \leq T_t - T_s$. $T_t$ may be the target duration. $T_s$ may be a preset interframe interval.

In some embodiments, the S310 may include an option as follows.

When a fifth duration is less than or equal to the target duration, the AP may determine that the target STA is allowed to transmit the PPDU within the target duration.

The fifth duration $T_5$ may meet: $T_5 = T_{max\text{-}PPDU} + T_s$, or $T_5 = T_{max\text{-}PPDU} + T_f + T_s$.

$T_{max\text{-}PPDU}$ may be a maximal transmission duration for transmitting the PPDU. $T_f$ may be a transmission duration for transmitting a feedback frame. $T_s$ may be a preset interframe interval.

In some embodiments, the preset interframe interval may include a total duration of multiple short interframe spaces (SIFS).

For example, the preset interframe interval may include a total duration of two short interframe spaces (SIFS).

In some embodiments, the feedback frame may be an acknowledgement (ACK) frame or a block acknowledgment (BA) frame.

In some embodiments, in addition to a scene of application of low delay communication based on resource reservation protection, the two enhanced ACK or BA control frames (as shown in FIG. 9 and FIG. 11, respectively) supporting enhanced functionality may also be applied to a scene of application of multi-link synchronous communication, such as PPDU alignment among multiple links, etc.

Therefore, in the embodiments of the disclosure, an AP may determine whether a target STA is allowed to transmit a PPDU within a target duration before a start time point of a next low-latency SP in a BSS, thereby ensuring that a PPDU to be transmitted by the target STA does not delay or damage designated transmission in a low-latency SP.

Furthermore, with the embodiments of the disclosure, it is ensured that a low-latency STA is able to acquire a TXOP and reliably transmit low-latency service data at a start time of a reserved SP, which solves uncertainty of an actual start time of a low-latency SP (such as a TWT SP) reserved for designated STA transmission in a Wi-Fi standard work mechanism under impact from another STA transmission, and thus removes impact on on-time transmission of low-latency service data, thereby protecting a designated SP configured for low-latency service access, and reducing a delay of transmission of low-latency service data.

Embodiments of methods of the disclosure are elaborated with reference to FIG. 5 to FIG. 13. Embodiments of devices of the disclosure are elaborated below with reference to FIG. 14 to FIG. 18. Understandably, a device embodiment corresponds to a method embodiment, and reference to which may be made for similar description.

FIG. 14 is a block diagram of a STA 400 according to embodiments of the disclosure. As shown in FIG. 14, the STA 400 may include a communication unit 410.

The communication unit 410 may be configured to, in response to a target duration meeting a first condition, not transmit a physical layer protocol data unit (PPDU) upon acquiring a transmission opportunity (TXOP) or within the TXOP acquired.

In addition or alternatively, the communication unit 410 may be configured to, in response to the target duration meeting a second condition, transmit the PPDU upon acquiring the TXOP or within the TXOP acquired.

The target duration may be located before a start time of a next low-latency service period (SP) in a Basic Service Set (BSS).

In some embodiments, the target duration may be a time interval between a start time of starting transmission of the PPDU and the start time of the next low-latency SP.

In some embodiments, when a transmission duration for transmitting the PPDU is determined, the first condition may include that a first duration may be greater than the target duration, and/or the second condition may include that the first duration may be less than or equal to the target duration.

The first duration $T_1$ may meet: $T_1 = T_{PPDU} + T_s$, or $T_1 = T_{PPDU} + T_f + T_s$.

$T_{PPDU}$ may be the transmission duration for transmitting the PPDU. $T_f$ may be a transmission duration for transmitting a feedback frame. $T_s$ may be a preset interframe interval.

In some embodiments, when a transmission duration for transmitting the PPDU is undetermined, the first condition may include that a second duration is greater than the target duration, and/or the second condition may include that the second duration is less than or equal to the target duration.

The second duration $T_2$ may meet: $T_2 = T_{min\text{-}PPDU} + T_s$, or $T_2 = T_{min\text{-}PPDU} + T_f + T_s$.

$T_{min\text{-}PPDU}$ may be a minimal transmission duration for transmitting the PPDU. $T_f$ may be a transmission duration for transmitting a feedback frame. $T_s$ may be a preset interframe interval.

In some embodiments, when the STA determines to transmit the PPDU upon acquiring the TXOP or within the TXOP acquired, the transmission duration $T_{PPDU}$ for transmitting the PPDU may meet: $T_{PPDU} \leq T_t - T_s$, or $T_{PPDU} \leq T_t - (T_f + T_s)$.

$T_1$ may be the target duration. $T_f$ may be the transmission duration for transmitting the feedback frame. $T_s$ may be the preset interframe interval.

In some embodiments, the STA 400 may further include a processing unit 420.

The processing unit may be configured to trigger a backoff flow in response to the target duration meeting the first condition.

In some embodiments, the target duration may be a time interval between a start time of starting transmission of a PPDU transmission sequence intended to be sent and the start time of the next low-latency SP.

In some embodiments, the first condition may include that a sixth duration is greater than the target duration, and/or the second condition may include that the sixth duration is less than or equal to the target duration.

The sixth duration $T_6$ may meet: $T_6=T_{PPDU\,TXS}$, or $T_6=T_{PPDU\,TXS+}\,T_s$.

$T_{PPDU\,TXS}$ may be a transmission duration of the PPDU transmission sequence intended to be sent. $T_s$ may be a preset interframe interval.

In some embodiments, the STA 400 may further include a processing unit 420.

When the target duration meets the first condition, the communication unit 410 may be configured to stop transmission of the PPDU transmission sequence intended to be sent, and the processing unit 420 may be configured to trigger a backoff flow.

In some embodiments, the STA 400 may further include a processing unit 420.

The processing unit 420 may be configured to not consider whether an end time of the TXOP may be later than the start time of the next low-latency SP when initiating the TXOP beyond a low-latency SP. Multiple PPDU transmission sequences may be intended to be sent within the TXOP. The multiple PPDU transmission sequences may include the PPDU transmission sequence intended to be sent.

The processing unit 420 may be configured to, before performing PPDU transmission sequence transmission, detect whether a PPDU transmission sequence to be transmitted lasts till after a start time of any low-latency SP.

During the TXOP, when an end time of ending transmission of the PPDU transmission sequence intended to be sent is later than the start time of the next low-latency SP, the communication unit 410 may be configured to stop transmission of the PPDU transmission sequence intended to be sent, and the processing unit 420 may be configured to trigger a backoff flow.

In some embodiments, a duration of a frame transmitted by the STA may be set using a single protection.

In some embodiments, the STA 400 may further include a processing unit 420.

The processing unit 420 may be configured to acquire the TXOP beyond a low-latency SP.

The processing unit 420 may be configured to, in response to an end time of a maximal duration of the TXOP coinciding with or being later than the start time of the next low-latency SP, set a duration of the TXOP as a seventh duration when initiating the TXOP. A start time of the seventh duration may be when the TXOP is acquired.

An end time of the seventh duration may be no later than the start time of the next low-latency SP. A time interval between the end time of the seventh duration and the start time of the next low-latency SP may be less than or equal to a preset interframe interval.

In some embodiments, the STA 400 may further include a processing unit 420.

The processing unit 420 may be configured to acquire the TXOP beyond a low-latency SP. An end time of the TXOP may be later than the start timef the next low-latency SP.

The processing unit 420 may be configured to set a duration of the TXOP as an eighth duration when initiating the TXOP. A start time of the eighth duration may be when the TXOP is acquired. An end time of the eighth duration may be later than the start time of the next low-latency SP.

A last frame transmitted by the STA before the start time of the next low-latency SP within the TXOP may be a contention free - end (CF-End) frame. A time interval between an end time of ending transmission of the CF-End frame and the start time of the next low-latency SP may be less than or equal to a preset interframe interval.

In some embodiments, the STA may be in a power save status. The STA 400 may further include a processing unit 420.

The processing unit 420 may be configured to, in response to no backoff flow having been initiated, or having initiated a backoff flow yet acquired no TXOP, and in response to a time interval between a present time and the start time of the next low-latency SP being less than or equal to a preset threshold, enter a doze status before the start time of the next low-latency SP, and stay in the doze status at least till the start time of the next low-latency SP.

In some embodiments, the preset threshold may be a sixth duration $T_6$, meeting: $T_6=T_{PPDU\,TXS}$, or $T_6=T_{PPDU\,TXS}+T_s$.

$T_{PPDU\,TXS}$ may be a transmission duration of a PPDU transmission sequence intended to be sent. $T_s$ may be a preset interframe interval.

In some embodiments, the communication unit 410 may be further configured to acquire the preset threshold via a restricted TWT SP announcement element or a restricted TWT element carrying the preset threshold.

In some embodiments, the preset interframe interval may include a duration of a short interframe space (SIFS).

In some embodiments, the communication unit 410 may be further configured to transmit a contention free - end (CF-End) frame within the target duration in response to that the STA does not transmit the PPDU upon acquiring the TXOP or within the TXOP acquired, and transmission of the CF-End frame is able to be completed within the target duration.

In some embodiments, the next low-latency SP may include a restricted Target Wake Time (TWT) SP.

In some embodiments, the communication unit 410 may be further configured to acquire a restricted TWT parameter through a restricted TWT element or a restricted TWT SP announcement element.

In some embodiments, the restricted TWT parameter may include information on a start time of a next restricted TWT SP.

In some embodiments, the restricted TWT element may be transmitted by an access point (AP) associated with the STA via at least one of a probe response frame, an association response frame, a reassociation response frame, a management frame, and a beacon frame carrying the restricted TWT element.

Alternatively, the restricted TWT SP announcement element may be transmitted by an access point (AP) associated with the STA via at least one of a probe response frame, an association response frame, a reassociation response frame, a management frame, and a beacon frame carrying the restricted TWT SP announcement element.

In some embodiments, the communication unit may be a communication interface or a transceiver, or may be an Input/output interface of a system on chip (SOC) or a communication chip.

Understandably, the STA 400 according to the embodiments of the disclosure may correspond to the STA in the method embodiments of the disclosure. The above-mentioned and other operations and/or functions of various units in the STA 400 are configured to implement a corresponding flow of the STA in the method 200 as shown in FIG. 5, which is not repeated here for brevity.

FIG. 15 is a block diagram of an AP 500 according to embodiments of the disclosure. As shown in FIG. 15, the AP 500 may include a processing unit 510.

The processing unit 510 may be configured to determine whether a target station (STA) is allowed to transmit a physical layer protocol data unit (PPDU) within a target duration before a start time of a next low-latency service period (SP) in a Basic Service Set (BSS).

In some embodiments, the target duration may be a time interval between an end time of ending transmission of a target feedback frame by the AP and the start time of the next low-latency SP. The target feedback frame may be directed at a first PPDU having been transmitted by the target STA.

In some embodiments, the processing unit 510 may be configured to determine whether the target STA is allowed to transmit the PPDU within the target duration before the start time of the next low-latency SP in the BSS, by:

in response to that a first duration is greater than the target duration, determining that the target STA is not allowed to transmit the PPDU within the target duration.

The first duration $T_1$ may meet: $T_1=T_{min-PPDU}+T_s$, or $T_1=T_{min-PPDU}+T_f+T_s$.

$T_{min-PPDU}$ may be a minimal transmission duration for transmitting the PPDU. $T_f$ may be a transmission duration for transmitting a feedback frame. $T_s$ may be a preset interframe interval.

In some embodiments, the processing unit 510 may be further configured to stop the target STA from acquiring a transmission opportunity (TXOP) within the target duration.

In some embodiments, the processing unit 510 may be configured to stop the target STA from acquiring the TXOP within the target duration by setting a continuation time of the target feedback frame.

The continuation time $T_{tf}$ of the target feedback frame may meet: $T_{tf} \geq T_f + T_t$, or $T_{tf} \geq T_t$.

$T_f$ may be the transmission duration for transmitting the feedback frame. $T_1$ may be the target duration.

In some embodiments, the processing unit 510 may be further configured to stop the target STA from transmitting the PPDU in a TXOP acquired within the target duration.

In some embodiments, the AP may further include a communication unit 520.

The communication unit 520 may be configured to transmit the target feedback frame to the target STA. The target feedback frame may include a first field. The first field may be configured to instruct the target STA to stop transmitting the PPDU within the target duration.

In some embodiments, the target feedback frame may include an acknowledgement (ACK) type or a block acknowledgment (BA) type for instructing to stop transmitting the PPDU.

In some embodiments, the AP may further include a communication unit 520.

The communication unit 520 may be configured to transmit an indication frame to the target STA before a second duration ahead of the start time of the next low-latency SP. The indication frame may be configured to forbid the target STA to transmit the PPDU. The second duration may be greater than or equal to a maximal TXOP duration that can be acquired by the target STA.

In some embodiments, the indication frame may include a control frame or a management frame carrying information on a quiet interval. The quiet interval may include at least the second duration before the start time of the next low-latency SP.

In some embodiments, the processing unit 510 may be specifically configured to, in response to that the target duration is greater than or equal to a first duration and less than a third duration, determine that the target STA is allowed to transmit the PPDU within the target duration.

The first duration $T_1$ and the third duration $T_3$ meet: $T_1=T_{min-PPDU}+T_s$, $T_3=T_{max-PPDU}+T_s$; or $T_1=T_{min-PPDU}+T_f+T_s$, $T_3=T_{max-PPDU}+T_t+T_s$.

$T_{min-PPDU}$ may be a minimal transmission duration for transmitting the PPDU. $T_{max-PPDU}$ may be a maximal transmission duration for transmitting the PPDU. $T_f$ may be a transmission duration for transmitting a feedback frame. $T_s$ may be a preset interframe interval.

In some embodiments, the AP may further include a communication unit 520.

The communication unit 520 may be configured to transmit a target feedback frame to the target STA. The target feedback frame may include a second field. The second field may be configured to indicate a restricting duration for restricting transmission of the PPDU by the target STA within the target duration.

In some embodiments, the target feedback frame may include an acknowledgement (ACK) type or a block acknowledgment (BA) type indicating the restricting duration for restricting transmission of the PPDU.

In some embodiments, the restricting duration $T_R$ may meet: $T_R \leq T_t - T_s$.

$T_1$ may be the target duration. $T_s$ may be a preset interframe interval.

In some embodiments, the AP may further include a communication unit 520.

The communication unit 520 may be configured to transmit a trigger frame to the target STA. The trigger frame may be configured to trigger transmission of at least one PPDU by the target STA, and an end time of ending transmission of the at least one PPDU is no later than the start time of the next low-latency SP.

In some embodiments, the processing unit 510 may be further configured to stop the target STA from acquiring a transmission opportunity (TXOP) within the target duration, and/or stop the target STA from transmitting the PPDU in a TXOP acquired within the target duration.

In some embodiments, the processing unit 510 may be specifically configured to determine that the target STA is allowed one PPDU transmission within the target duration.

In some embodiments, a buffer status report (BSR) reported by the target STA may indicate that a PPDU length required by a queue does not exceed a fourth duration.

The fourth duration $T_4$ may meet: $T_4 \leq T_t - T_s$. $T_1$ may be the target duration. $T_s$ may be a preset interframe interval.

In some embodiments, a buffer status report (BSR) reported by the target STA may indicate that a PPDU length required by a queue exceeds a fourth duration.

The fourth duration $T_4$ may meet: $T_4 \leq T_t - T_s$. $T_t$ may be the target duration. $T_s$ may be a preset interframe interval.

In some embodiments, the processing unit 510 may be further configured to determine whether the target STA is allowed to transmit the PPDU within the target duration before the start time of the next low-latency SP in the BSS by: in response to that a fifth duration is less than or equal to the target duration, determining that the target STA is allowed to transmit the PPDU within the target duration.

The fifth duration $T_5$ may meet: $T_5 = T_{max-PPDU} + T_s$, or $T_5 = T_{max-PPDU} + T_f + T_s$.

$T_{max-PPDU}$ may be a maximal transmission duration for transmitting the PPDU. $T_f$ may be a transmission duration for transmitting a feedback frame. $T_s$ may

be a preset interframe interval.

In some embodiments, the preset interframe interval may include a total duration of multiple short interframe spaces (SIFS).

In some embodiments, the preset interframe interval may include a total duration of two short interframe spaces (SIFS).

In some embodiments, the next low-latency SP may include a restricted Target Wake Time (TWT) SP.

In some embodiments, the communication unit may be a communication interface or a transceiver, or may be an Input/output interface of a system on chip (SOC) or a communication chip. The processing unit may be one or more processors.

Understandably, the AP 500 according to the embodiments of the disclosure may correspond to the AP in the method embodiments of the disclosure. The above-mentioned operations and/or functions of various units in the AP 500 are configured to implement a corresponding flow of the AP in the method 300 as shown in FIG. 7, which is not repeated here for brevity.

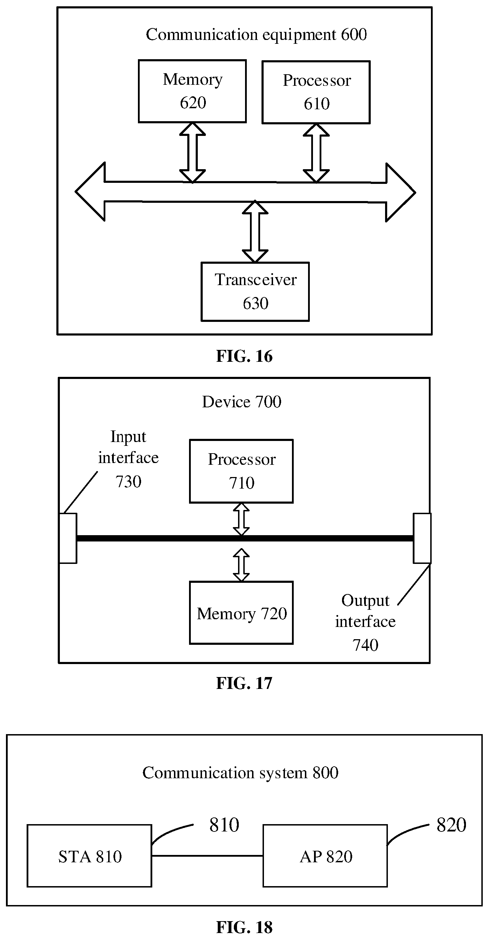

FIG. 16 is a diagram of a structure of communication equipment 600 according to embodiments of the disclosure. As shown in FIG. 16, the communication equipment 600 includes a processor 610. The processor 610 may call and run a computer program from a memory to implement a method according to the embodiments of the disclosure.

In some embodiments, as shown in FIG. 16, the communication equipment 600 may further include a memory 620. The processor 610 may call and run a computer program from the memory 620 to implement the method according to the embodiments of the disclosure.

The memory 620 may be a separate device separate from the processor 610, or may be integrated in the processor 610.

In some embodiments, as shown in FIG. 16, the communication equipment 600 may further include a transceiver 630. The processor 610 may control communication by the transceiver 630 with another equipment. Specifically, the transceiver may transmit information or data to the other equipment, or receive information or data transmitted by the other equipment.

The transceiver 630 may include a transmitter and a receiver. The transceiver 630 may further include one or more antennas.

In some embodiments, the communication equipment 600 may be the AP according to the embodiments of the disclosure, and the communication equipment 600 may implement a corresponding flow implemented by the AP in the methods according to the embodiments of the disclosure, which is not repeated here for brevity.

In some embodiments, the communication equipment 600 may be the STA according to the embodiments of the disclosure, and the communication equipment 600 may implement a corresponding flow implemented by the STA in the methods according to the embodiments of the disclosure, which is not repeated here for brevity.

FIG. 17 is a diagram of a structure of a device according to embodiments of the disclosure. As shown in FIG. 17, the device 700 may include a processor 710. The processor 710 may call and run a computer program from a memory to implement the methods according to the embodiments of the disclosure.

In some embodiments, as shown in FIG. 17, the device 700 may further include a memory 720. The processor 710 may call and run a computer program from the memory 720 to implement the methods according to the embodiments of the disclosure.

The memory 720 may be a separate device separate from the processor 710, or may be integrated in the processor 710.

In some embodiments, the device 700 may further include an input interface 730. The processor 710 may control communication by the input interface 730 with another equipment or chip. Specifically, the input interface may receive information or data transmitted by the other equipment or chip.

In some embodiments, the device 700 may further include an input interface 730. The processor 710 may control communication by the input interface 730 with another equipment or chip. Specifically the input interface may receive information or data transmitted by the other equipment or chip.

In some embodiments, the device 700 may further include an output interface 740. The processor 710 may control communication by the output interface 740 with another equipment or chip. Specifically the output interface may transmit information or data to the other equipment or chip.

In some embodiments, the device may be applied to the AP according to the embodiments of the disclosure, and the device may implement a corresponding flow implemented by the AP in the method according to the embodiments of the disclosure, which is not repeated here for brevity.

In some embodiments, the device may be applied to the STA according to the embodiments of the disclosure, and the device may implement a corresponding flow implemented by the STA in the method according to the embodiments of the disclosure, which is not repeated here for brevity.

In some embodiments, the device according to the embodiments of the disclosure may also be a chip, such as a system-level chip, a system chip, a chip system, a SOC chip, etc.

FIG. 18 is a block diagram of a communication system 800 according to embodiments of the disclosure. As shown in FIG. 18, the communication system 800 may include a STA 810 and an AP 820.

The STA 810 may be configured to implement a corresponding function implemented by the STA in the method herein, and the AP 820 may be configured to implement a corresponding function implemented by the AP in the method herein, which is not repeated here for brevity.

Understandably, the processor according to the embodiments of the disclosure may be an integrated circuit chip capable of signal processing. In implementation, steps of the method embodiments may be carried out via an integrated logic circuit of hardware in the processor or instructions in form of software. The processor may be a general-purpose processor, a Digital Signal Processor (DSP), an Application Specific Integrated Circuit (ASIC), a Field Programmable Gate Array (FPGA), or another programmable logic device, a discrete gate, or a transistor logic device, a discrete hardware component, etc. The processor may implement or execute various methods, steps, and logical block diagrams according to the embodiments of the disclosure. The general-purpose processor may be a microprocessor or any conventional processor, etc. The steps of the method disclosed in the embodiments of the disclosure may be directly embodied as being carried out by a hardware decoding processor, or by a combination of hardware and software modules in the decoding processor. The software modules may be located in a mature storage medium in the art, such as a RAM, a flash memory, a ROM, a PROM, an electrically rewritable programmable memory, a register, etc. The storage medium may be located in the memory. The processor may read information in the memory, and combine it with hardware of the processor to perform the steps of the method herein.

Understandably, the memory in embodiments of the disclosure may be volatile and/or non-volatile memory. The non-volatile memory may be Read-Only Memory (ROM), Programmable ROM (PROM), Erasable PROM (EPROM), Electrically EPROM (EEPROM), or flash memory. The volatile memory may be a Random Access Memory (RAM), which is used as an external cache. By way of illustrative instead of restrictive description, many forms of RAM are available, such as a Static RAM (SRAM), a Dynamic RAM (DRAM), a Synchronous DRAM (SDRAM), a Double Data Rate SDRAM (DDRSDRAM), an Enhanced SDRAM (ESDRAM), a Synchlink DRAM (SLDRAM), a Direct Rambus RAM (DRRAM). Note that the memory of the system and method described in the disclosure is intended to include, but is not limited to, these and any other suitable types of memory.

Understandably, the memory is described illustratively rather than restrictively. For example, a memory according to embodiments of the disclosure may also be a static RAM (SRAM), a dynamic RAM (DRAM), a synchronous DRAM (SDRAM), a double data rate SDRAM (DDRSDRAM), an enhanced SDRAM (ESDRAM), a synch link DRAM (SLDRAM), a direct rambus RAM (DRRAM), etc. That is, the memory 402 according to embodiments of the disclosure is intended to include, but is not limited to, these and any other suitable types of memory.

Embodiments of the present disclosure also provide a computer-readable storage medium configured to store a computer program.

In some embodiments, the computer-readable storage medium may be applied to the AP in the embodiments of the disclosure, and the computer program may allow a computer to execute a corresponding flow implemented by the AP in the method according to the embodiments of the disclosure, which is not repeated here for brevity.

In some embodiments, the computer-readable storage medium may be applied to the STA in the embodiments of the disclosure, and the computer program may allow a computer to execute a corresponding flow implemented by the STA in the method according to the embodiments of the disclosure, which is not repeated here for brevity.

Embodiments of the present disclosure also provide a computer program product including computer program instructions.

In some embodiments, the computer program product may be applied to the AP in the embodiments of the disclosure, and the computer program instructions may allow a computer to execute a corresponding flow implemented by the AP in the method according to the embodiments of the disclosure, which is not repeated here for brevity.

In some embodiments, the computer program product may be applied to the STA in the embodiments of the disclosure, and the computer program instructions may allow a computer to execute a corresponding flow implemented by the STA in the method according to embodiments of the disclosure, which is not repeated here for brevity.

Embodiments of the present disclosure also provide a computer program.

In some embodiments, the computer program may be applied to the AP in the embodiments of the disclosure. When being run on a computer, the computer program may allow the computer to execute a corresponding flow implemented by the AP in the method according to the embodiments of the disclosure, which is not repeated here for brevity.

In some embodiments, the computer program may be applied to the STA in the embodiments of the disclosure. When being run on a computer, the computer program may allow the computer to execute a corresponding flow implemented by the STA in the method according to the embodiments of the disclosure, which is not repeated here for brevity.

Additional examples

In example 1, there is provided a method for wireless communication, including that: in response to a target duration meeting a first condition, a station (STA) does not transmit a physical layer protocol data unit (PPDU) upon acquiring a transmission opportunity (TXOP), or within the TXOP acquired; and/or in response to the target duration meeting a second condition, the STA transmits the PPDU upon acquiring the TXOP or within the TXOP acquired. The target duration is located before a start time of a next low-latency service period (SP) in a BSS.

In example 2, the method of example 1, wherein the target duration is a time interval between a start time at which the PPDU is intended to be sent and the start time of the next low-latency SP.

In example 3, the method of example 2, wherein in response to a transmission duration for transmitting the PPDU being determined, the first condition includes that a first duration is greater than the target duration, and/or the second condition includes that the first duration is less than or equal to the target duration. The first duration $T_1$ meets: $T_1 = T_{PPDU} + T_s$, or $T_1 = T_{PPDU} + T_f + T_s$, where $T_{PPDU}$ is the transmission duration for transmitting the PPDU, $T_f$ is a transmission duration for transmitting a feedback frame, and $T_s$ is a preset interframe interval.

In example 4, the method of example 2, wherein in response to a transmission duration for transmitting the PPDU being undetermined, the first condition includes that a second duration is greater than the target duration, and/or the second condition includes that the second duration is less than or equal to the target duration. The second duration $T_2$ meets: $T_2 = T_{min-PPDU} + T_s$, or $T_2 = T_{min-PPDU} + T_f + T_s$, where $T_{min-PPDU}$ is a minimal transmission duration for transmitting the PPDU, $T_f$ is a transmission duration for transmitting a feedback frame, and $T_s$ is a preset interframe interval.

In example 5, the method of example 4, wherein in response to that the STA determines to transmit the PPDU upon acquiring the TXOP or within the TXOP acquired, the transmission duration $T_{PPDU}$ for transmitting the PPDU meets: $T_{PPDU} \leq T_t - T_s$, or $T_{PPDU} \leq T_t - (T_f + T_s)$, where $T_1$ is the target duration, $T_f$ is the transmission duration for transmitting the feedback frame, and $T_s$ is the preset interframe interval.

In example 6, the method of example 3, further including: triggering, by the STA, a backoff flow in response to the target duration meeting the first condition.

In example 7, the method of example 1, wherein the target duration is a time interval between a start time of starting transmission of a PPDU transmission sequence intended to be sent and the start time of the next low-latency SP.

In example 8, the method of example 7, wherein the first condition includes that a sixth duration is greater than the target duration, and/or the second condition includes that the sixth duration is less than or equal to the target duration. The sixth duration $T_6$ meets: $T_6 = T_{PPDU\ TXS}$, or $T_6 = T_{PPDU\ TXS} + T_s$, where $T_{PPDU\ TXS}$ is a transmission duration of the PPDU transmission sequence intended to be sent, and $T_s$ is a preset interframe interval.

In example 9, the method of example 8, further including: in response to the target duration meeting the first condition, the STA stops transmission of the PPDU transmission sequence intended to be sent, and triggering a backoff flow.

In example 10, the method of any one of examples 7 to 9, further including that: the STA does not consider whether an end time of the TXOP is later than the start time of the next low-latency SP when initiating the TXOP beyond a low-latency SP, wherein multiple PPDU transmission sequences are intended to be sent within the TXOP, the multiple PPDU transmission sequences including the PPDU transmission sequence intended to be sent; before performing PPDU transmission sequence transmission, the STA detects whether a PPDU transmission sequence to be transmitted lasts till after a start time of any low-latency SP; and during the TXOP, in response to an end time of ending transmission of the PPDU transmission sequence intended to be sent being later than the start time of the next low-latency SP, the STA stops transmission of the PPDU transmission sequence intended to be sent, and triggering a backoff flow.

In example 11, the method of example 10, wherein a duration of a frame transmitted by the STA is set using a single protection.

In example 12, the method of any one of examples 1 to 5, further including that: the STA acquires the TXOP beyond a low-latency SP; and in response to an end time of a maximal duration of the TXOP coinciding with or being later than the start time of the next low-latency SP, the STA sets a duration of the TXOP as a seventh duration when initiating the TXOP. An start time of the seventh duration is when the TXOP is acquired, an end time of the seventh duration is no later than the start time of the next low-latency SP, and a time interval between the end time of the seventh duration and the start time of the next low-latency SP is less than or equal to a preset interframe interval.

In example 13, there is provided an access point (AP), including a processing unit (510) configured to: determine whether a target station (STA) is allowed to transmit a physical layer protocol data unit (PPDU) within a target duration before a start time of a next low-latency service period (SP) in a Basic Service Set (BSS).

In example 14, there is provided a station (STA), including a memory (620) and a processor (610). The memory (620) is configured to store a computer program, and the processor (610) is configured to call and run the computer program stored in the memory (620) to implement the method of any one of examples 1 to 12.

In example 15, there is provided an access point (AP), including a memory (620) and a processor (610). The memory (620) is configured to store a computer program, and the processor (610) is configured to call and run the computer program stored in the memory (620) to determine whether a target station (STA) is allowed to transmit a physical layer protocol data unit (PPDU) within a target duration before a time point of start of a next low-latency service period (SP) in a Basic Service Set (BSS).

A person having ordinary skill in the art may realize that a combination of illustrative units as well as illustrative algorithm steps according to the embodiments of the disclosure may be implemented by electronic hardware or a combination of electronic hardware and computer software. Whether such a function is implemented by hardware or by software may depend on a specific application of a technical solution as well as a design constraint. Depending on a specific application, a person having ordinary skill in the art may implement the described functions using different methods. Such implementation however should not be deemed going beyond a scope of a technical solution of the present disclosure.

A person having ordinary skill in the art will clearly understand that, for convenience and conciseness of description, reference may be made to a corresponding process in the foregoing method embodiments for a detailed working process of a system, a device, a unit, etc., described above, which is not repeated here.

In a number of embodiments provided in the disclosure, it should be understood that a method, a device, a system, etc., as disclosed, may be implemented in other ways. For example, the described device embodiments are merely illustrative. For example, division of units is merely logic function division and there may be another division in actual implementation. For example, parts or components can be combined, or integrated into another system, or some features/characteristics may be omitted or skipped. Furthermore, the coupling, or direct coupling or communicational connection illustrated or discussed herein may be implemented through indirect coupling or communicational connection among some interfaces, devices, or parts, and may be electrical, mechanical, or of another form.

The units described as separate components may or may not be physically separated. Components shown as units may be or may not be physical units. They may be located in one place, or distributed on multiple network units. Some or all of the units may be selected to achieve the purpose of a solution of the embodiments as needed.

In addition, functional units in the embodiments of the present disclosure may be integrated in one processing part, or exist as separate physical units respectively. Alternatively, two or more units may be integrated in one unit.

When implemented in form of a software functional unit and sold or used as an independent product, the function may be stored in a computer-readable storage medium. Based on such an understanding, the essential part or a part contributing to prior art of the technical solution of the present disclosure or part of the technical solution may appear in form of a software product. The software product is stored in a storage medium, and includes a number of instructions for allowing computer device (such as a personal computer, a server, network device, etc.) to execute all or part of the methods in the embodiments of the present disclosure. The storage medium includes various media that may store program codes, such as a U disk, a mobile hard disk, Read-Only Memory (ROM), Random Access Memory (RAM), a magnetic disk, a CD, etc.

What described are but embodiments of the present disclosure and are not intended to limit the scope of the present disclosure. Any modification, equivalent replacement, and/or the like made within the technical scope of the present disclosure, as may occur to a person having ordinary skill in the art, shall be included in the scope of the present disclosure. The scope of the present disclosure thus should be determined by the claims.

**Claims**

1. A method for wireless communication, **characterized by** comprising:

   determining, by a station, STA, whether or not to transmit a physical layer protocol data unit, PPDU, upon acquiring a transmission opportunity, TXOP, or within the TXOP acquired according to a comparison of a first duration and a target duration;
   when the first duration is greater than the target duration, determining, by the STA, not to transmit the PPDU upon acquiring the TXOP or within the TXOP acquired; and/or
   when the first duration is less than or equal to the target duration, transmitting, by the STA, the PPDU upon acquiring the TXOP or within the TXOP acquired,
   wherein the target duration is located before a start time of a next low-latency service period, SP in a Basic Service Set, BSS.

2. The method of claim 1, wherein the target duration is a time interval between a start time at which the PPDU is intended to be sent and the start time of the next low-latency SP.

3. The method of claim 2, wherein

   the first duration $T_1$ meets: $T_1 = T_{PPDU} + T_s$, or $T_1 = T_{PPDU} + T_f + T_s$,
   wherein $T_{PPDU}$ is a determined transmission duration for transmitting the PPDU, $T_f$ is a transmission duration for transmitting a feedback frame, and $T_s$ is a preset interframe interval.

4. The method of claim 3, further comprising:
   triggering, by the STA, a backoff flow when the first duration is greater than the target duration.

5. The method of claim 1, wherein the target duration is a time interval between a start time of starting transmission of a PPDU transmission sequence intended to be sent and the start time of the next low-latency SP.

6. The method of claim 5, wherein

   the first duration being greater than the target duration comprises that a sixth duration is greater than the target duration, and/or the first duration being less than or equal to the target duration comprises that the sixth duration is less than or equal to the target duration,
   wherein the sixth duration $T_6$ meets: $T_6 = T_{PPDU\ TXS}$, or $T_6 = T_{PPDU\ TXS} + T_s$,
   wherein $T_{PPDU\ TXS}$ is a transmission duration of the PPDU transmission sequence intended to be sent, and $T_s$ is a preset interframe interval.

7. The method of claim 6, further comprising:
   when the six duration is greater than the target duration, stopping, by the STA, transmission of the PPDU transmission sequence intended to be sent, and triggering a backoff flow.

8. The method of any one of claims 5 to 7, further comprising:

   not considering, by the STA, whether an end time of the TXOP is later than the start time of the next low-latency SP when initiating the TXOP beyond a low-latency SP, wherein multiple PPDU transmission sequences are intended to be sent within the TXOP, the multiple PPDU transmission sequences comprising the PPDU transmission sequence intended to be sent;
   before performing PPDU transmission sequence transmission, detecting, by the STA, whether a PPDU transmission sequence to be transmitted lasts till after a start time of any low-latency SP; and
   during the TXOP, when an end time of ending transmission of the PPDU transmission sequence intended to be sent is later than the start time of the next low-latency SP, stopping, by the STA, transmission of the PPDU transmission sequence intended to be sent, and triggering a backoff flow.

9. The method of claim 8, wherein a duration of a frame transmitted by the STA is set using a single protection.

10. The method of any one of claims 1 to 3, further comprising:

    acquiring, by the STA, the TXOP beyond a low-latency SP; and

when an end time of a maximal duration of the TXOP coincides with or is later than the start time of the next low-latency SP, setting, by the STA, a duration of the TXOP as a seventh duration when initiating the TXOP, wherein a start time of the seventh duration is a time when the TXOP is acquired, an end time of the seventh duration is no later than the start time of the next low-latency SP, and a time interval between the end time of the seventh duration and the start time of the next low-latency SP is less than or equal to a preset interframe interval.

11. A method for wireless communication, **characterized by** comprising:

determining, by an access point, AP, whether a target station, STA, is allowed to transmit a physical layer protocol data unit, PPDU, within a target duration before a start time of a next low-latency service period, SP, in a Basic Service Set, BSS;
when a first duration is greater than the target duration, determining, by the AP, that the STA is not allowed to transmit the PPDU within the target duration; or
when the first duration is less than or equal to the target duration, determining, by the AP, that the target STA is allowed to transmit the PPDU within the target duration.

12. The method of claim 11, wherein

the first duration $T_1$ meets: $T_1 = T_{min-PPDU} + T_s$, or $T_1 = T_{min-PPDU} + T_f + T_s$,
wherein $T_{min-PPDU}$ is a minimal transmission duration for transmitting the PPDU, $T_f$ is a transmission duration for transmitting a feedback frame, $T_s$ is a preset interframe interval.

13. The method of claim 11, wherein the determining, by the AP, that the target STA is allowed to transmit the PPDU within the target duration, comprises:

when the target duration is greater than or equal to the first duration and less than a third duration, determining, by the AP, that the target STA is allowed to transmit the PPDU within the target duration,
wherein the first duration $T_1$ and the third duration $T_3$ meet: $T_1 = T_{min-PPDU} + T_s$, $T_3 = T_{max-PPDU} + T_s$; or $T_1 = T_{min-PPDU} + T_f + T_s$, $T_3 = T_{max-PPDU} + T_f + T_s$,
wherein $T_{min-PPDU}$ is a minimal transmission duration for transmitting the PPDU, $T_{max-PPDU}$ is a maximal transmission duration for transmitting the PPDU, $T_f$ is a transmission duration for transmitting a feedback frame, and $T_s$ is a preset

interframe interval.

14. A station, STA, **characterized by** comprising a memory (620) and a processor (610),

wherein the memory (620) is configured to store a computer program, and
wherein the processor (610) is configured to call and run the computer program stored in the memory (620) to implement the method of any one of claims 1 to 10.

15. An access point, AP, **characterized by** comprising a memory (620) and a processor (610),

wherein the memory (620) is configured to store a computer program, and
wherein the processor (610) is configured to call and run the computer program stored in the memory (620) to implement the method of any one of claims 11 to 13.

**100**

**FIG. 1**

**FIG. 2**

**FIG. 3**

Low-latency SP
indication frame

Low-latency SP

Low-latency SP

AP

ACK/BA1          ACK/BA2

Start time of
low-latency SP

Low-latency PPDU

Start time of
low-latency SP

PPDU
2

STA1

Delay

Regular PPDU

PPDU1

STA2

TXOP acquired by STA2

**FIG. 4**

**200**

When a target duration meets a first condition, a station
(STA) does not transmit a physical layer protocol data
unit (PPDU) upon acquiring a transmission opportunity
(TXOP) or within the TXOP acquired; and/or when the
target duration meets a second condition, the STA
transmits the PPDU upon acquiring the TXOP or within
the TXOP acquired. The target duration is located before
a start time of a next low-latency service period (SP) in a
Basic Service Set (BSS)

S210

**FIG. 5**

Low-latency SP
indication frame

ACK/BA

Low-latency SP

Low-latency SP

AP

Start time of
low-latency SP

Start time of
low-latency SP

PPDU

STA

Target
duration

**FIG. 6**

**300**

An access point (AP) determines whether a target station
(STA) is allowed to transmit a physical layer protocol data
unit (PPDU) within a target duration before a start time of
a next low-latency service period (SP) in a Basic Service
Set (BSS)

S310

**FIG. 7**

Low-latency SP
indication frame

Target
duration

Low-
latency SP

Low-
latency SP

AP

Target
feedback
frame

Start time of
low-latency SP

Start time of
low-latency SP

STA

First
PPDU

**FIG. 8**

| BA ACK strategy | BA type/ACK type | Reserved | ID info |
|---|---|---|---|

Add ACK type or BA
type instructing whether
to stop transmitting
PPDU

Add an indication bit
indicating whether to
stop transmitting PPDU

**FIG. 9**

Low-latency SP Indication
indication frame frame
ACK/BA Low-latency SP

AP

Start time of End time of
low-latency SP low-latency SP

Second duration

EHT
STA

PPDU

Legacy
STA

Stop transmitting PPDU

**FIG. 10**

| BA ACK strategy | BA type/ACK type | Reserved | ID info |
|---|---|---|---|

Add ACK type or BA
type indicating
restricting duration for
transmitting PPDU

Add one or more
indication bits indicating
restricting duration for
transmitting PPDU

**FIG. 11**

Low-latency SP
indication frame
Target duration
Low-latency
SP
Low-latency
SP

AP

Target Trigger Feedback
feedback frame frame 2
frame
Start time of
low-latency SP
Start time of
low-latency SP

First
PPDU

Second
PPDU

STA

**FIG. 12**

**FIG. 13**

**FIG. 14**

**FIG. 15**

Communication equipment 600

Memory
620

Processor
610

Transceiver
630

**FIG. 16**

Device 700

Input
interface
730

Processor
710

Memory 720

Output
interface
740

**FIG. 17**

Communication system 800

STA 810

810

AP 820

820

**FIG. 18**

**EP 4 626 125 A2**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 2021075885 W